## Europäisches Patentamt
## European Patent Office
## Office européen des brevets

(19)

(11) Numéro de publication: **0 165 094**
**B1**

(12)
# FASCICULE DE BREVET EUROPÉEN

(45) Date de publication du fascicule du brevet:
**04.11.87**

(51) Int. Cl.⁴: **B 62 D 35/00**

(21) Numéro de dépôt: **85400811.7**

(22) Date de dépôt: **25.04.85**

(54) **Proue de véhicule à géométrie variable.**

(30) Priorité: **18.05.84 FR 8408182**

(43) Date de publication de la demande:
**18.12.85 Bulletin 85/51**

(45) Mention de la délivrance du brevet:
**04.11.87 Bulletin 87/45**

(84) Etats contractants désignés:
**DE GB IT**

(56) Documents cité:
**DE-A-3 316 129**
**FR-A-2 489 772**
**FR-A-2 511 330**
**GB-A-2 017 023**
**US-A-4 116 482**

(73) Titulaire: **AUTOMOBILES PEUGEOT, 75, avenue de la Grande Armée, F-75116 Paris (FR)**
Titulaire: **AUTOMOBILES CITROEN, 62 Boulevard Victor- Hugo, F-92200 Neuilly- sur- Seine (FR)**

(72) Inventeur: **Fabre, Eric, 11, rue de Paris, F-91570 Bievres (FR)**

(74) Mandataire: **Boivin, Claude, 9, rue Edouard-Charton, F-78000 Versailles (FR)**

EP 0 165 094 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1987

## Description

Pour améliorer la tenue de route et les performances d'un véhicule automobile ainsi que pour réduire les échauffements et sa consommation en carburant, il est connu de faire varier son carénage avant en fonction de sa vitesse.

Cette variation de carénage peut s'accompagner d'une variation de la section d'entrée de l'air assurant le refroidissement du moteur ou celui des organes de freinage.

On a ainsi proposé dans le brevet FR-A-2.511.330 de prévoir une jupe inférieure avant disposée sous le pare-chocs et susceptible de pivoter vers le bas autour d'un axe transversal, lorsque la vitesse du véhicule augmente. Cette jupe a pour effet de modifier considérablement et simultanément le profil d'attaque de la proue du véhicule, la section d'entrée d'air qui augmente avec la vitesse et l'incidence du profil d'intrados par rapport au sol. Elle a essentiellement pour but de résoudre les problèmes soulevés aux grandes vitesses par les véhicules de compétition en assurant à ces vitesses une forte augmentation de la capacité de refroidissement et de l'effet de sol, au détriment de la consommation dont l'importance est secondaire pour les véhicules de ce genre.

Le brevet US-A-4 116 452 décrit une proue de véhicule à géométrie variable dont le profil d'attaque comporte à sa partie inférieure un élément mobile en translation en fonction de la vitesse du véhicule, dans le but d'améliorer l'aérodynamisme aux grandes vitesses.

La présente invention a pour objet une proue de véhicule à géométrie variable qui est, au contraire, destinée aux véhicules de tourisme aux performances modérées, dans lesquels le facteur consommation est important, en assurant une forte augmentation du refroidissement aux faibles allures (trafic urbain en régime instable) avec un profil d'attaque variant peu en fonction des vitesses; en effet, l'aérodynamisme de ces véhicules est étudié pour la vitesse maximale et l'influence de l'effet de sol est très secondaire.

Par rapport au premier brevet précité dans lequel une proue de véhicule à géométrie variable comporte des moyens modifiant la section d'entrée d'air de refroidissement en fonction de la vitesse et comprend un élément profilé constituant la partie inférieure du profil d'attaque, l'invention est caractérisée en ce que cet élément est mobile en translation par rapport à la structure du véhicule et conformé de manière à modifier, en se déplaçant en translation, la section d'entrée de l'air de refroidissement et est lié à des moyens sensibles à la vitesse du véhicule de manière que cette section d'entrée diminue quand la vitesse augmente et inversement. Grâce à cette disposition, le débit d'air de refroidissement est pratiquement constant.

Les moyens sensibles à la vitesse du véhicule peuvent comprendre un palonnier mobile qui est soumis à l'action du vent relatif produit par le mouvement du véhicule et dont le déplacement fournit un signal de commande du déplacement de l'élément profilé.

Les moyens pour déplacer l'élément profilé peuvent comprendre un moteur électrique commandant un pignon en prise avec une crémaillère qui est interposée sur un câble sans fin passant sur des galets portés par la structure du véhicule et ancré en au moins un point à l'élément profilé.

Les moyens pour déplacer l'élément profilé peuvent également comprendre au moins un vérin reliant cet élément à la structure du véhicule et sur le circuit d'alimentation duquel est interposée une électro-vanne commandée par un signal fonction de la vitesse.

On a décrit ci-après, à titre d'exemple non limitatif, un mode de réalisation d'une proue de véhicule selon l'invention avec référence aux dessins schématiques annexés dans lesquels:

La Figure 1 est une vue en élévation de la proue;

La Figure 2 en est une coupe transversale suivant II-II de la Figure 1;

La Figure 3 en est une vue en coupe transversale suivant III-III de la Figure 1;

La Figure 4 en est une vue en plan;

La Figure 5 est une vue en perspective montrant comment l'élément profilé peut être déplacé;

La Figure 6 est une vue en coupe d'un détail des moyens de déplacement prévus à la Figure 5;

La Figure 7 montre la loi de déplacement de l'élément profilé en fonction de la vitesse;

La Figure 8 montre un exemple des moyens sensibles à la vitesse pour déplacer l'élément profilé;

La Figure 9 montre un autre exemple de ces moyens;

La Figure 10 montre comment un signal fonction de la vitesse du véhicule peut être transformé pour déplacer l'élément profilé;

La Figure 11 est une vue en perspective montrant comment l'élément profilé peut être déplacé de manière hydraulique.

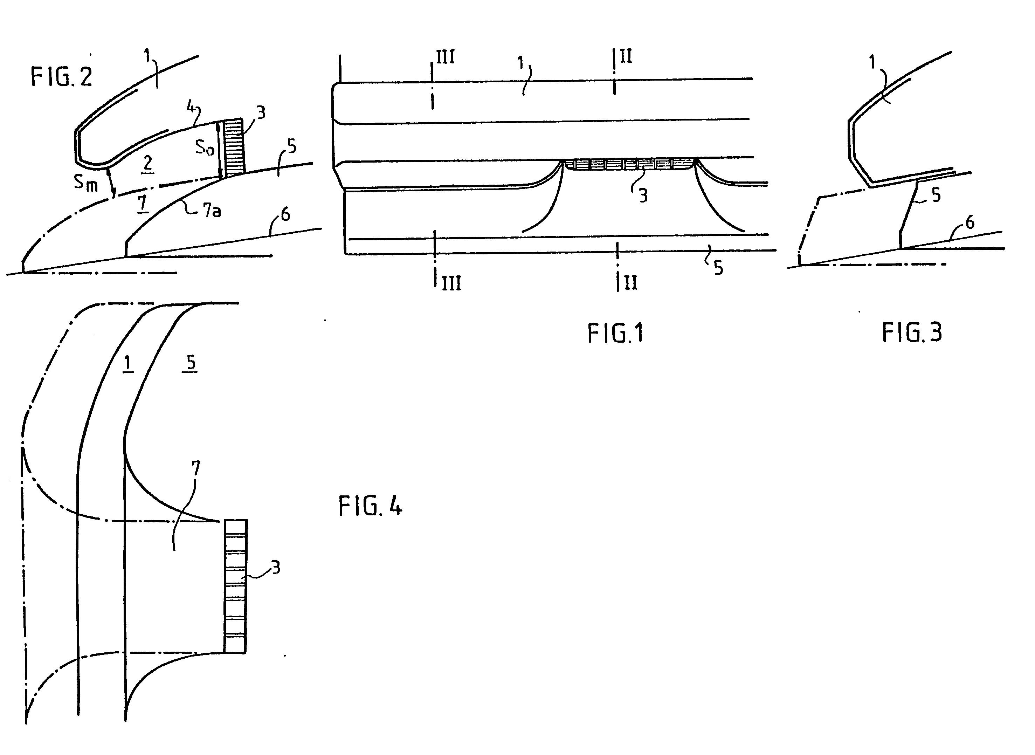

Aux Figures 1 à 4, on voit en 1 le pare-chocs avant d'un véhicule. Ce pare-chocs présente dans sa partie centrale un évidement inférieur 2 dans lequel est disposé le radiateur 3 de refroidissement du moteur. La face supérieure 4 de cet évidement est courbe en ayant sa concavité dirigée vers le bas.

Sur le radiateur 3 est monté mobile en translation un élément profilé 5 qui s'étend sur toute la longueur du pare-chocs. La trajectoire de cet élément est indiquée par la ligne 6; elle pourrait être courbe, mais est ici rectiligne; elle pourrait être horizontale, mais dans l'exemple représenté elle est inclinée vers le bas, vers l'avant du véhicule. La face supérieure de cet élément, qui est sensiblement parallèle à la ligne 6, présente, au droit du radiateur 3 un évidement 7; la face supérieure 7a de l'élément 5 est courbe au droit de cet évidement en ayant sa concavité dirigée vers le bas; elle a sensiblement la même forme que la face supérieure de l'évidement 2. En dehors de cet évidement, cette face supérieure est presque adjacente à la face inférieure du pare-chocs 1 et parallèle à celle-ci.

Des moyens décrits plus loin sont prévus pour déplacer l'élément profilé 5 en fonction de la vitesse du véhicule. Aux faibles vitesses, l'élément occupe la position représentée en traits pleins à la Figure 2, dans laquelle il se trouve en arrière du pare-chocs. Il est protégé des chocs, son influence aérodynamique est faible et la surface d'entrée d'air $S_0$ qu'il dégage est maximale. Lorsque la vitesse du véhicule augmente, l'élément profilé est déplacé vers l'avant et la section d'entrée d'air diminue pour atteindre une valeur minimale $S_m$ à partir d'une certaine vitesse (position représentée en traits mixtes à la Figure 2). Aux vitesses élevées, l'élément 5 se trouve en avant du pare-chocs et modifie considérablement les caractéristiques aérodynamiques du véhicule, aussi bien son $C_x$ que son $C_z$. L'élément est plus bas dans sa position avant que dans sa position arrière, mais cela est sans inconvénient, car les problèmes de garde au sol et les risques de petits chocs sont moindres à vitesse élevée.

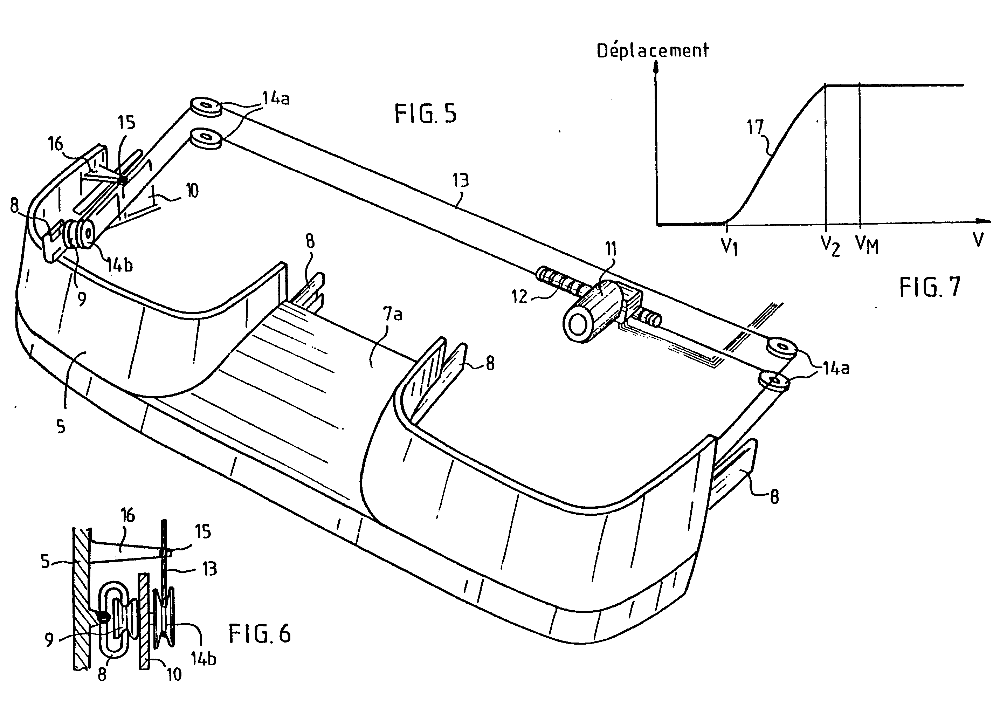

Dans le mode de réalisation des Figures 5 et 6, l'élément profilé 5 est solidaire de quatre guides 6, de section en C, montés coulissants sur des galets 9 dont les axes sont portés par des pièces de la structure 10 du véhicule. L'arbre de sortie d'un moto-réducteur électrique 11 également porté par cette structure porte un pignon non visible au dessin et en prise avec une crémaillère 12. Cette crémaillère est interposée sur un câble de commande sans fin 13 qui passe sur des galets de renvoi 14a portés par la structure 10 ainsi que sur des galets de renvoi 14b coaxiaux aux galets 9. Ce câble 13 est ancré en 15 à des pattes latérales intérieures 16 de l'élément 5. La patte 16 non représentée du côté gauche est fixée au brin inférieur du fil 13. Sur la Figure 5 le profilé 6 a été représenté partiellement pour rendre visible le galet 9.

Le moteur 11 est commandé en fonction de la vitesse de façon discrète, à des intervalles de temps prédéterminés, ou en fonction des variations de vitesse, de façon à donner à l'élément profilé 5 une loi de déplacement telle que celle représentée en 17 à la Figure 7. Selon cette loi, l'élément 5 occupe sa position arrière représentée en traits pleins à la Figure 2 jusqu'à ce que la vitesse atteigne la valeur $V_1$. Lorsque la vitesse augmente, l'élément se déplace vers l'avant et atteint sa position avant représentée en traits mixtes à la Figure 2 pour une valeur $V_2$ de la vitesse. Il reste ensuite immobile si la vitesse continue de croître jusqu'à la vitesse maximale $V_M$.

La prise de l'information "vitesse" peut être effectuée par exemple comme représenté à la Figure 6. Un palonnier articulé 18, soumis à l'action du ressort de rappel 19 est monté devant une ouïe 20 pratiquée dans la paroi extérieure 21 du véhicule, de sorte que le vent relatif produit par le mouvement de ce véhicule et schématisé par la flèche V, tend à faire pivoter le palonnier contre l'action du ressort 19. Ce palonnier est solidaire d'un curseur 22 qui, à partir d'une certaine course de la pédale, coopère avec un élément résistant 23 avec lequel il constitue un rhéostat.

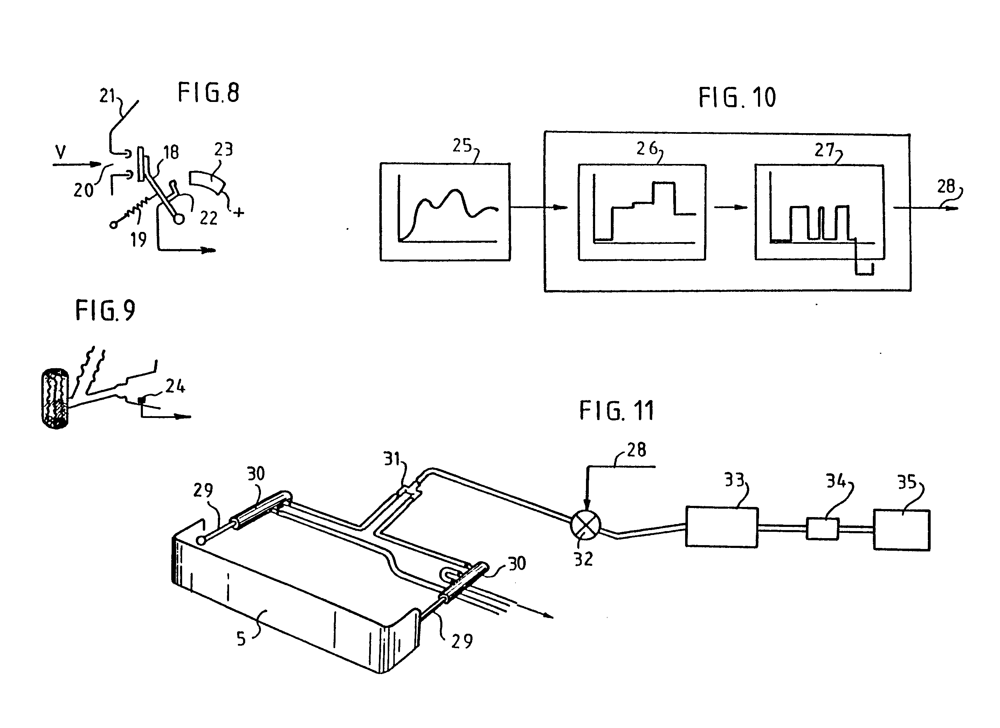

Dans le mode de réalisation de la Figure 9, la prise d'information est assurée par un capteur 24 monté sur la boîte de vitesses.

L'information obtenue, qui représente la variation de la vitesse en fonction du temps, comme représenté en 25, est mise en forme dans un circuit 26, puis différenciée par un circuit 27. Le signal obtenu en 29 commande le moteur 11.

La Figure 11 montre un mode de réalisation dans lequel l'élément profilé 5 est commandé hydrauliquement. Cet élément est solidaire des tiges de piston 29 de deux vérins 30 disposés chacun d'un côté de l'élément et solidaires de la structure du véhicule. Les vérins 30 sont alimentés par un circuit hydraulique comprenant un répartiteur 31, une électro-vanne 32 commandée par exemple par le signal 28 fourni par le circuit différentiateur 27, un réservoir de liquide à haute pression 33, une pompe 34 et un réservoir de liquide é basse pression 35. Bien entendu, les deux réservoirs 33 et 35 ainsi que la pompe 34 peuvent être utilisés en outre à d'autres fins.

## Revendications

1. Proue de véhicule à géométrie variable comportant des moyens modifiant la section d'entrée d'air de refroidissement en fonction de la vitesse et comprenant un élément profilé (5) constituant la partie inférieure du profil d'attaque, caractérisée en ce que cet élément (5) est mobile en translation par rapport à la structure du véhicule et conformé de manière à modifier, en se déplaçant en translation, la section d'entrée de l'air de refroidissement et est lié à des moyens sensibles à la vitesse du véhicule de manière que cette section d'entrée diminue quand la vitesse augmente et inversement.

2. Proue de véhicule selon la revendication 1, caractérisée en ce que les moyens sensibles à la vitesse du véhicule comprennent un palonnier mobile (18) qui est soumis à l'action du vent relatif produit par le mouvement du véhicule et dont le déplacement fournit un signal de commande, (28) du déplacement de l'élément profilé (5).

3. Proue de véhicule selon la revendication 1, caractérisée en ce que les moyens sensibles à la vitesse du véhicule comprennent un capteur (24) monté sur la boîte de vitesses.

4. Proue de véhicule selon l'une des revendications 1 à 3 caractérisée en ce que les moyens pour déplacer l'élément profilé (5) comprennent un moteur électrique (11) commandant un pignon en prise avec une crémaillère (12) qui est interposée sur un câble sans fin (13) passant sur des galets (14a et 14b) portés par la structure (10) du véhicule et ancré en au moins un point (15) à l'élément profilé (5).

5. Proue de véhicule selon l'une des revendications 1 à 3,

caractérisée en ce que les moyens pour déplacer l'élément profilé (5) comprennent au moins un vérin (30) reliant cet élément à la structure du véhicule et sur le circuit d'alimentation duquel est interposée une électrovanne (32) commandée par un signal (28) fonction de la vitesse.

6. Proue de véhicule selon l'une des revendications 1 à 5,

caractérisée en ce que la translation de l'élément profilé (5) est rectiligne.

7. Proue de véhicule selon l'une des revendications 1 à 5,

caractérisée en ce que la translation de l'élément profilé (5) est curviligne.

8. Proue de véhicule selon la revendication 6,

caractérisée en ce que la translation de l'élément profilé (5) est parallèle au sol.

9. Proue de véhicule selon l'une des revendications 1 à 8,·

caractérisée en ce que la translation de l'élément profilé (5) est plongeante, vers l'avant.

10. Proue de véhicule selon l'une des revendications 1 à 9,

caractérisée en ce que l'élément profilé (5) et le radiateur (3) du véhicule sont disposés sous le parechocs (1) de ce véhicule.

## Patentansprüche

1. Fahrzeugbug mit variabler Geometrie, der Mittel zum Verhändern des Eintrittsquerschnitts für die Kühlluft in Abhängigkeit von der Geschwindigkeit aufweist und mit einem das Unterteil des Anströmprofils bildenden Profilelement (5), dadurch gekennzeichnet, daß dieses Profilelement (5) in Bezug auf den Fahrzeugaufbau in Längsrichtung bewegbar und derart ausgebildet ist, daß es bei seiner Verschiebung in Längsrichtung den Eintrittsquerschnitt für die Kühlluft verändert und mit auf die Fahrzeuggeschwindigkeit ansprechenden Mitteln derart verbunden ist, daß dieser Eintrittsquerschnitt bei ansteigender Geschwindigkeit kleiner wird und umgekehrt.

2. Fahrzeugbug nach Anspruch 1, dadurch gekennzeichnet, daß die auf die Fahrzeuggeschwindigkeit ansprechenden Mittel einen beweglichen Schwenkhebel (18) aufweisen, der der Einwirkung des durch die Bewegung des Fahrzeuges erzeugten relativen Fahrtwindes ausgesetzt ist und dessen Bewegung ein Steuersignal (28) zur Verschiebung des Profilelementes (5) liefert.

3. Fahrzeugbug nach Anspruch 1, dadurch gekennzeichnet, daß die aus die Fahrzeuggeschwidigkeit ansprechenden Mittel einen Meßwertgeber (24) aufweisen, der am Getriebe angeordnet ist.

4. Fahrzeugbug nach einem der Ansprüche 1 bis 3, dadurch gekennzeichnet, daß die Mittel zur Verschiebung des Profilelementes (5) einen Elektromotor (11) aufweisen, der ein Ritzel antreibt, das mit einer Zahnstange (12) in Eingriff steht, welche in ein endloses Kabel (13) eingeschaltet ist, das über am Fahrzeugaufbau (10) angeordnete Rollen (14a, 14b) läuft, und das an mindestens einen Punkt (15) am Profilelement (5) verankert ist.

5. Fahrzeugbug nach einem der Ansprüche 1 bis 3, dadurch gekennzeichnet, daß die Mittel zur Verschiebung des Profilelements (5) mindestens einen das Profilelement mit dem Fahrzeugaufbau verbindenden Kolben-Zylinderantrieb (30) aufweisen, in dessen Speisekreis ein Magnetventil (32) angeordnet ist, das durch ein von der Geschwindigkeit abhängiges Signal (26) angesteuert wird.

6. Fahrzeugbug nach einem der Ansprüche 1 bis 5, dadurch gekennzeichnet, daß die Verschiebung des Profilelements (5) geradlinig erfolgt.

7. Fahrzeugbug nach einem der Ansprüche 1 bis 5, dadurch gekennzeichnet, daß die Verschiebung des Profilelements (5) krummlinig erfolgt.

8. Fahrzeugbug nach Anspruch 6, dadurch gekennzeichnet, daß die Verschiebung des Profilelements (5) parallel zum Erdboden erfolgt.

9. Fahrzeugbug nach einem der Ansprüche 1 bis 6, dadurch gekennzeichnet, daß die Verschiebund des Profilelements (5) nach vorne abwärts geneint erfolgt.

10. Fahrzeugbug nach einem der Ansprüche 1 bis 9, dadurch gekennzeichnet, daß das Profilelement (5) und der Fahrzeugkühler (3) unterhalb der Stoßstange (1) des Fahrzeugs angeordnet sind.

## Claims

1. Vehicle prow with variable geometry including means modifying the cooling air intake section as a function of the speed and having a profiled element (5) forming the lower part of the leading profile,

characterized in that this element (5) is movable in translation with respect to the structure of the vehicle and is shaped so as to modify, by moving in translation, the cooling air intake section and is connected to means responsive to the speed of the vehicle so that this intake section reduces when the speed increases and conversely.

2. Vehicle prow according to claim 1, characterized in that the means responsive to the speed of the vehicle include a mobile bar (18) which is subjected to the action of the relative wind produced by the movement of the vehicle and whose displacement delivers a signal (28) controlling the movement of the profiled element (5).

3. Vehicle prow according to claim 1, characterized in that the means responsive to the speed of the vehicle include a sensor (24) mounted on the gear box.

4. Vehicle prow according to one of claims 1 to 3, characterized in that the means for moving the profiled element (5) include an electric motor (11) controlling a pinion engaged with a rack (12) which is interposed on an endless cable (13) passing over rollers (14a, and 14b) carried by the structure (10) of the vehicle and anchored at at least one point (15) to the profiled element (5).

5. Vehicle prow according to one of claims 1 to 3, characterized in that the means for moving the profiled element (5) include at least one actuator (30) connecting this element to the structure of the vehicle and in the power supply circuit of which is inserted an electrovalve (32) controlled by a signal (28) depending on the speed.

6. Vehicle prow according to one of claims 1 tto 5, characterized in that the translational movement of the profiled element (4) is rectilinear.

7. Vehicle prow according to one of claims 1 to 5, characterized in that the translational movement of the profiled element (5) is curvilinear.

8. Vehicle prow according to claim 6, characterized in that the translational movement of the profiled element (5) is parallel to the ground.

9. Vehicle prow according to one of claims 1 to 8, characterized in that the translational movement of the profiled element (5) plunges forwardly.

10. Vehicle prow according to one of claims 1 to 9, characterized in that the profiled element (5) and the radiator (3) of the vehicle are disposed under the bumper (1) of this vehicle.

0 165 094

FIG.1

FIG.2

FIG.3

FIG.4

FIG. 5

14a

15

16

8

14b

9

10

8

8

7a

5

12

11

13

Déplacement

17

V₁        V₂  VM        V

FIG. 7

14a

8

8

FIG. 6

16

15

5

13

9

8

10

14b

0 165 094

3

FIG.8

FIG. 10

FIG.9

FIG. 11

0 165 094